Europäisches Patentamt

European Patent Office

Office européen des brevets

(19)

(11) Veröffentlichungsnummer: **0 182 933**
**B1**

(12) **EUROPÄISCHE PATENTSCHRIFT**

(45) Veröffentlichungstag der Patentschrift :
28.06.89

(51) Int. Cl.⁴ : **G 01 M 1/22**

(21) Anmeldenummer : 84114446.2

(22) Anmeldetag : 29.11.84

(54) Verfahren zur Gewinnung eines Unwuchtmesswerts eines Körpers sowie Vorrichtung hierzu.

(43) Veröffentlichungstag der Anmeldung :
04.06.86 Patentblatt 86/23

(45) Bekanntmachung des Hinweises auf die Patenterteilung : 28.06.89 Patentblatt 89/26

(84) Benannte Vertragsstaaten :
DE FR GB IT

(56) Entgegenhaltungen :
DE–A– 2 459 282

(73) Patentinhaber : CARL SCHENCK AG
Landwehrstrasse 55 Postfach 40 18
D-6100 Darmstadt (DE)

(72) Erfinder : Giers, Alfred, Dipl.-Ing.
Messeler Weg 12
D-6101 Rossdorf (DE)
Erfinder : Holdinghausen, Paul, Dipl.-Ing.
Hartenauerstrasse 44
D-6101 Bickenbach (DE)

(74) Vertreter : Dallhammer, Herbert, Dipl.-Ing.
CARL SCHENCK AG Patentabteilung Postfach 4018
Landwehrstrasse 55
D-6100 Darmstadt (DE)

EP 0 182 933 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 182 933 B1

## Beschreibung

Die Erfindung betrifft ein Verfahren zur Gewinnung eines Unwuchtmeßwertes eines Körpers aus einem bei einer Unwuchtmessung gewonnenen Bezugssignal und mindestens einem Meßsignal, wobei der Unwuchtmeßwert digital vorliegt und eine Vorrichtung hierzu.

Durch die DE-OS 24 59 282 ist ein Verfahren und eine Vorrichtung der eingangs geschilderten Art bekannt geworden, bei der mittels digitaler Meßsignalverarbeitung ein praktisch fehlerfreier Unwuchtmeßwert eines Körpers in kurzer Zeit vorliegt. Bei vielen Anwendungsfällen ist es jedoch nicht von vorn herein bekannt, wie groß die, dem Meßsignal überlagerten Störschwingungen sind und welche Frequenzen sie haben. Diese überlagerten Störschwingungen können den Unwuchtmeßwert beeinflussen, insbesondere wenn die Meßzeit zu kurz gewählt wird. Andererseits ist es unwirtschaftlich, aus Sicherheitsgründen eine sehr große Zahl von Unwuchtmeßwerten über einen großen Zeitraum zu gewinnen, nur um sicher zu gehen, daß evtl. vorhandene Störschwingungen das Ergebnis nicht verfälschen. Die eingangs genannte DE-OS 24 59 282 schlägt hierzu vor, die Anzahl der Multiplikationen mindestens dreimal durchzuführen, hieraus durch digitale Mitttelung einen Unwuchtmeßwert darzustellen, der einerseits aus Gründen der Wirtschaftlichkeit mit möglichst kurzen Meßzeiten erreicht wird und der andererseits als representativer Unwuchtmeßwert gilt. Ausgehend hiervon liegt der Erfindung die Aufgabe zugrunde, fälschence Einflüsse, insbesondere durch Störschwingungen anderer Frequenzen hervorgerufen, bei einem derart gewonnenen Unwuchtmeßwert auszuschalten und auch die Genauigkeit des Unwuchtmeßwerts anzupassen. Diese Aufgabe wird durch die kennzeichnenden Merkmale des Anspruchs 1 gelöst. Durch Speicherung des zunächst gewonnenen Unwuchtmeßwertes und anschließender Mittelwertbildung des gespeicherten Unwuchtmeßwertes mit einem neuen Unwuchtmeßwert kann erstmals der Einfluß von Störschwingungen anderer Frequenzen überwacht werden. Darüber hinaus kann die Abweichung des ersten Meßwerts von einem zweiten Meßwert festgestellt und berücksichtigt werden, wenn beispielsweise ein beschaufelter Turbinenrotor in einem ersten Meßlauf auf Unwucht untersucht wird, abgestellt wird und unter denselben Meßbedingungen in einem zweiten Meßlauf erneut untersucht wird ; zufolge der Beweglichkeit der Turbinenschaufeln am Umfang des Turbinengrundkörpers ist es möglich, daß sich die Turbinenschaufeln bei jedem Meßlauf in etwas anderer Form « setzen ». Durch dieses verschiedene Setzen werden auch geringfügige Unterschiede in den Unwuchtmeßwerten auftreten. Durch das erfinderische Verfahren gemäß Anspruch 1 können derartige Fehler minimiert werden und der zuletzt ermittelte Unwuchtmeßwert stellt damit den für dieses Bauteil besten Unwuchtmeßwert dar. Anspruch 2 stellt eine Ausgestaltung des Anspruchs 1 dar.

Die im Anspruch 3 unter Schutz gestellte Verfahrensweise berücksichtigt, daß während eines einzigen Meßvorgangs, also ohne Stillstand des zu untersuchenden Rotors, eine Reihe von Unwuchtmeßwerten gebildet werden, durch die der tatsächliche Unwuchtmeßwert optimiert wird. Ein derartiges Verfahren kann auch bei großen Generatoren eingesetzt werden, bei denen die Wicklung « gebacken » wird.

Durch die in Anspruch 4 unter Schutz gestellte Verfahrensweise läßt sich der Einfluß des neuen Meßwertes auf den bisherigen Meßwert beeinflussen.

Anspruch 5 lehrt anstelle des bisherigen gleitenden Mittelwertbildung eine nicht gleitende Mittelwertbildung dergestalt, daß die gewünschte Anzahl von Messungen unter denselben Meßbedingungen, d. h. mit demselben Rotor in mehreren Meßläufen oder unter denselben Meßbedingungen während desselben Meßlaufs nacheinander gespeichert werden und anschließend die Summe aller Messungen durch die Anzahl aller Messungen dividiert wird und so der Mittelwert angezeigt wird.

In Anspruch 6 wird eine Potenzierung und anschließende Radizierung der gewonnenen Meßwerte unter Schutz gestellt.

Die Ansprüche 7 und 8 berücksichtigen die Beeinflussung der neu hinzukommenden Werte in Abhängigkeit, ob der gewählte Exponent kleiner oder größer 1 ist.

In Anspruch 9 wird eine nicht gleitende Mittelwertbildung aus den Extremwerten unter Schutz gestellt und Anspruch 10 stellt eine gleitende Mittelwertbildung aus den Extremwerten dar.

Anspruch 11 stellt ein Verfahren unter Schutz, bei dem in Abhängigkeit einer vorgegebenen Toleranz die Mittelwertbildung und damit die Optimierung des Unwuchtmeßwertes eines Körpers abgebrochen werden kann. In Ausgestaltung hierzu wird vorgeschlagen, die Anzahl der Unterschreitungen vorzuwählen (Anspruch 12).

Die Vorrichtungsansprüche 13 und 14 zeigen die Bauteile für eine gleitende Mittelwertbildung bzw. die Bildung eines gleitenden exponentialgewichteten Mittelwertes, die Ansprüche 15, 16, und 17 die Bauteile für eine nicht gleitende Mittelwertbildung aus dem arithmetischen Mittelwert bzw. die Bildung eines nicht gleitenden exponentialgewichteten Mittelwertes und für eine nicht gleitende Mittelwertbildung aus den Extremwerten.

Das Kennzeichen des Anspruchs 18 stellt eine Vorrichtung unter Schutz für die Bildung eines gleitenden Mittelwertes aus den Extremwerten und Anspruch 19 offenbart eine Vorrichtung zum Toleranzvergleich zwischen neuem und bisherigem Mittelwert zum Abbruch der Messung bei Toleranzunterschreitung.

Auf Grund der Erfindung ist es damit möglich, Fehlereinflüsse, die durch Störschwingungen

2

auftreten, auszuschalten, indem die einzelnen gewonnenen Meßwerte miteinander verglichen werden. Durch eine mehrfache Überwachung des Unwuchtmeßwertes durch Kontrollwerte, die jeweils in derselben Weise gewonnen werden, wird erreicht, daß ein bereinigter digital gewonnener Unwuchtmeßwert vorliegt und zwar durch die Verbesserung des ursprünglich auf digitale Weise gewonnenen Unwuchtmeßwertes. Auch kann darüber hinaus derselbe Vorgang in einem einzigen Meßlauf durchgeführt werden. Bei beiden Arbeitsverfahren wird die Verbesserung des ursprünglich auf digitale Weise gewonnenen Unwuchtmeßwertes durch eine arithmetische Mittelwertbildung, eine gleitende Mittelwertbildung eine geometrische Mittelwertbildung, eine Mittelwertbildung mit Gewichtung, eine Mittelwertbildung nach dem Verfahren der kleinsten Fehlerpotenzen oder durch Mittelwertbildung aus dem größten und kleinsten gewonnenen Unwuchtmeßwert erreicht. Dabei kann die Mittelwertbildung über eine vorgegebene Anzahl von weiteren Meßvorgängen erfolgen, über eine vorgegebene Zeit oder über einen Zeitraum, der durch Erreichen eines Zustandes gegeben ist, bei dem der Mittelwert nur noch um ein Geringes schwankt. Die Beendigung der Mittelwertbildung kann dabei vom Bedienungsmann eingeleitet oder automatisch erfolgen.

Die Erfindung wird anhand der folgenden Zeichnung näher erläutert. Es zeigen :

Fig. 1 schematisch eine Einrichtung zur gleitenden Mittelwertbildung

Fig. 2 eine Einrichtung zur nicht gleitenden Mittelwertbildung

Fig. 3 die Bildung eines nicht gleitenden arithmetischen Mittelwerts

Fig. 4 eine Einrichtung zur Bildung eines gleitenden Mittelwertes

Fig. 5 eine Einrichtung zur Bestimmung eines expotentialgewichteten Mittelwertes

Fig. 6 eine Einrichtung zur Bildung eines gleitenden expotentialgewichteten Mittelwertes

Fig. 7 eine Einrichtung der nicht gleitenden Mittelwertbildung aus Extremwerten Fig. 8 eine Einrichtung einer gleitenden Mittelwertbildung aus Extremwerten und

Fig. 9 eine Einrichtung für einen Toleranzvergleich zwischen neuem und altem Mittelwert zwecks Abbruch der Messungen bei Toleranzunterschreitung.

In der nachfolgenden Beschreibung werden dieselben Bezugsziffern für Bauteile verwendet, die dieselbe Funktion besitzen und es wird in diesem Aufführungsbeispiel angenommen, daß der Unwucht-meßwert gemäß der deutschen Offenlegungsschrift 24 59 282 digital ermittelt wurde. Dieser Unwucht-meßwert wird mit $N_\sigma$ bezeichnet.

Es wird darauf hingewiesen, daß erfindungsgemäß der Vorgang der Mittelwertbildung nicht auf eine digitale Ermittlung des Unwuchtmeßwertes eingeschränkt ist, sondern daß die Überwachung und Optimierung erfindungsgemäß auch mit nicht digital gewonnenen Unwuchtmeßwerten beaufschlagt werden kann.

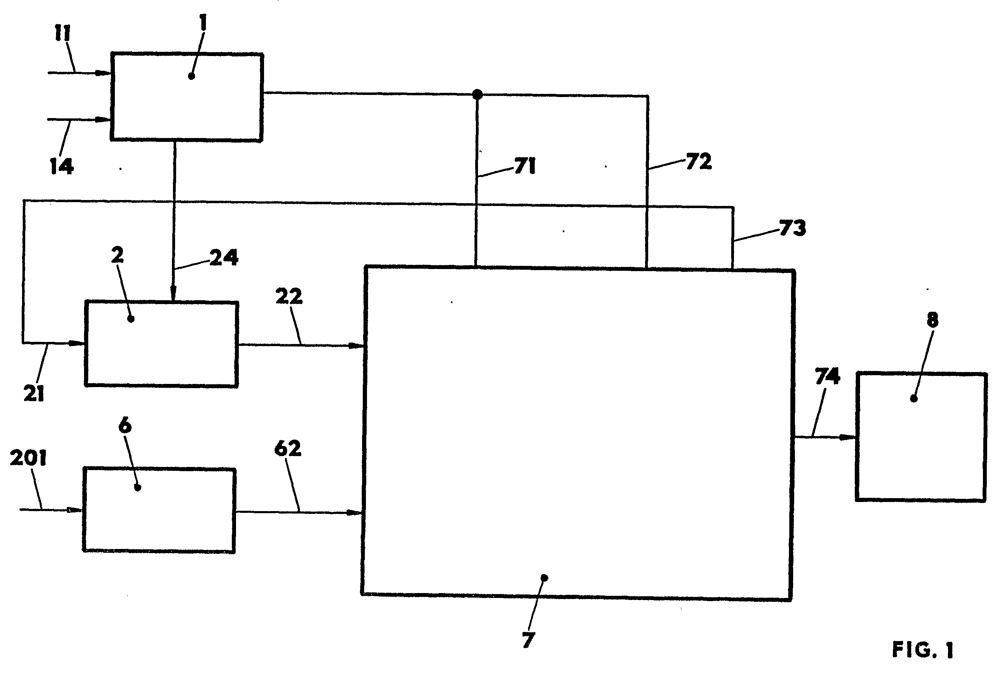

Gemäß Fig. 1 wird ein Unwuchtmeßwert $N_\sigma$ über eine Leitung 201 einem Zwischenspeicher 6 zugeführt und von dort über eine Leitung 62 einem Mittelwertbildner 7, in dem eine der später beschriebenen Berechnungen durchgeführt wird und deren Ergebnis über eine Leitung 74 einer Anzeige und/oder Weiterverarbeitungsvorrichtung 8 zugeführt wird. Mit Start eines Meßzyklus wird ein Zähler 1 über eine Leitung 11 auf Null gesetzt. Mit der Gewinnung des ersten Meßwerts wird über eine weitere Leitung 14 der Zähler 1 gestartet und zählt und speichert die Anzahl der Messungen (n). Nunmehr erfolgt im Mittelwertbildner 7 eine erste Mittelwertbildung aus dem Inhalt des Zwischenspeichers 6 und dem Inhalt eines Speichers 2, in dem der bisherige Mittelwert $N_{o-1}$, der in diesem Falle noch Null beträgt, gespeichert ist. Dieser so erhaltene Mittelwert, der im Ausführungsbeispiel zunächst dem ersten Unwuchtmeßwert entspricht, wird in der Anzeige und/oder Weiterverarbeitungsvorrichtung 8 angezeigt, im Speicher 2 gesteuert vom Zähler 1 über Leitung 24 abgelegt und anschließend der Zwischenspeicher 6 für die Aufnahme eines neuen Unwuchtmeßwertes bereit gemacht.

Nachdem ein neuer Unwuchtmeßwert im Zwischenspeicher 6 vorhanden ist, wird dieser im Mittelwertbildner 7 in derselben Weise mit dem nunmehr im Speicher 2 vorhandenen Wert verarbeitet, so daß ein neuer Mittelwert in der Anzeige- und/oder Weiterverarbeitungsvorrichtung 8 zur Anzeige gelangt und gleichzeitig den bisherigen, im Speicher 2 enthaltenen, bisherigen Mittelwert ersetzt ; dabei wird der Zählerstand des Zählers 1 um eins erhöht.

Der Bedienungsmann kann nunmehr urteilen, ob die Abweichung zwischen der ersten Anzeige in der Anzeige- und/oder Weiterverarbeitungsvorrichtung 8 und der zweiten Anzeige darauf schließen läßt, das größere Störungen in den einzelnen Meßwerten enthalten sind und ob diese Störungen, die zu Anzeigeveränderungen führen, zulässig sind. Dieser Vorgang kann, wie weiter unten beschrieben, auch automatisch erfolgen. Falls das Ergebnis der Mittelwertbildung noch nicht befriedigt, wird der oben beschriebene Vorgang so lange wiederholt, bis das Ergebnis darauf schließen läßt, daß eine weitere Mittelwertbildung keine Verbesserung über das gewünschte Maß hinausbringt.

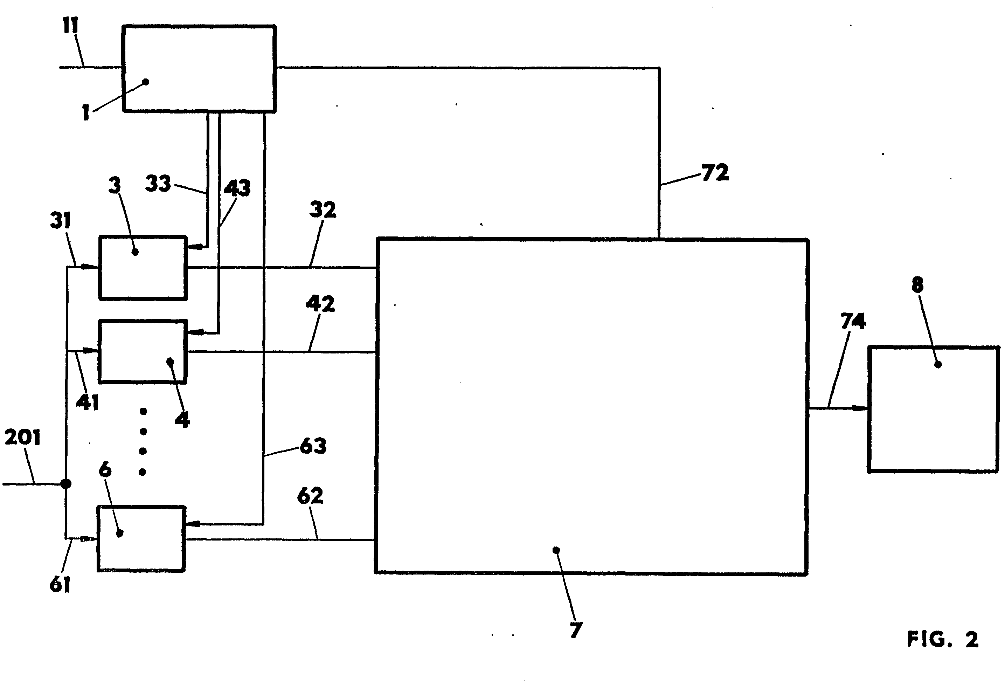

Eine Abwandlung des Verfahrens wird nunmehr anhand der Fig. 2 erläutert. Hier ist vorgesehen, daß die Ergebnisse von nacheinander gewonnenen Unwuchtmeßwerten über die Leitung 201 einer Verteilereinrichtung zugeführt werden. Gesteuert vom Zähler 1 (über Leitungen 33, 43 ... 63) wird das Ergebnis der ersten bis n-ten Messung in einem jeweils zugehörigen Zwischenspeicher 3 bis 6 über Leitungen 31, 41 ... 61 zugeführt (gemäß Ausführungsbeispiel ; jedoch ist die Anzahl der Zwischenspeicher nicht auf die in der Figur dargestellten beschränkt) abgelegt. Nach jeder Messung wird wiederum der Zähler 1 für die Anzahl der Messungen hochgesetzt ; so daß sein Inhalt jeweils der Zahl der durchgeführten Messungen 1 bis n entspricht. Nach einer vorgegebenen Zeit oder nach Speicherung einer vorgegebenen Anzahl von Meßvorgängen oder nach jedem neuen Meßvorgang wird in dem Mittelwertbildner 7 eine Berechnung durchgeführt, deren Ergebnis in der Anzeige- und/oder Weiterverarbeitungsvorrichtung 8 dargestellt wird. Auch kann die in Fig. 2 erläuterte nicht gleitende Mittelwertbildung beliebig oft wiederholt werden und entweder manuell oder automatisch, wie oben näher erläutert, beendet werden.

Im Mittelwertbildner 7 kann, wie nachfolgend näher erläutert, zur Mittelwertbildung je nach Anforderung eine der folgenden bekannten mathematischen Prozeduren durchgeführt werden :

1. arithmetische Mittelwertbildung aus n Werten

$$A_1 = \frac{\sum\limits_{\sigma=1}^{n} N_\sigma}{n}$$

2. gleitender arithmetischer Mittelwert

$$A_2 = \frac{M \cdot (n-1) + N_n}{n}$$

dabei ist M der beim vorletzten Lauf errechnete Mittelwert

3. exponentiell gewichteter Mittelwert, z. B. bei Z = 2 bedeutet dies Mittelwert nach Gauß

$$A_3 = \frac{1}{n} \sqrt[Z]{N_1^Z + N_2^Z + \cdots N_n^Z}$$

4. gleitender exponentiell gewichteter Mittelwert

$$A_4 = \frac{1}{n} \sqrt[Z]{\left( \left( \frac{1}{n-1} \sqrt[Z]{\sum_{\sigma=1}^{n-1} N_\sigma^Z} \right) \cdot (n-1) \right)^Z + N_n^Z}$$

$$= \frac{1}{n} \sqrt[Z]{((A_4 \text{ für } n = 1 \cdots n-1) \cdot (n-1))^Z + N_n^Z}$$

5. Mittelwert aus Extremwerten (kann auch gleitend durchgeführt werden)

$$A_5 = \frac{N_{max} + N_{min}}{2}$$

Da der einzelne Unwuchtmeßwert $N_\sigma$ eine komplexe Größe ist, muß die Mittelwertbildung sowohl für den Real- und Imaginärteil getrennt erfolgen, was bei dem Verfahren und den Vorrichtungen nicht weiter erläutert ist, da dies lediglich eine Verdoppelung der dargestellten Speicher und der Rechenschaltungen bedeutet.

In der nachfolgenden Beschreibung werden die einzelnen Einrichtungen, die sich innerhalb des Mittelwertbildners 7 befinden unter Berücksichtigung der Erläuterung zu Fig. 1 oder Fig. 2 beschrieben. Die mit Bezugsziffern versehenen Zuleitungen zum Mittelwertbildner 7 entsprechen den in den Figuren 1 und 2 dargestellten und mit denselben Bezugsziffern bezeichneten Zuleitungen. Nicht beschriebene Bezugsziffern, siehe nachfolgende Figuren.

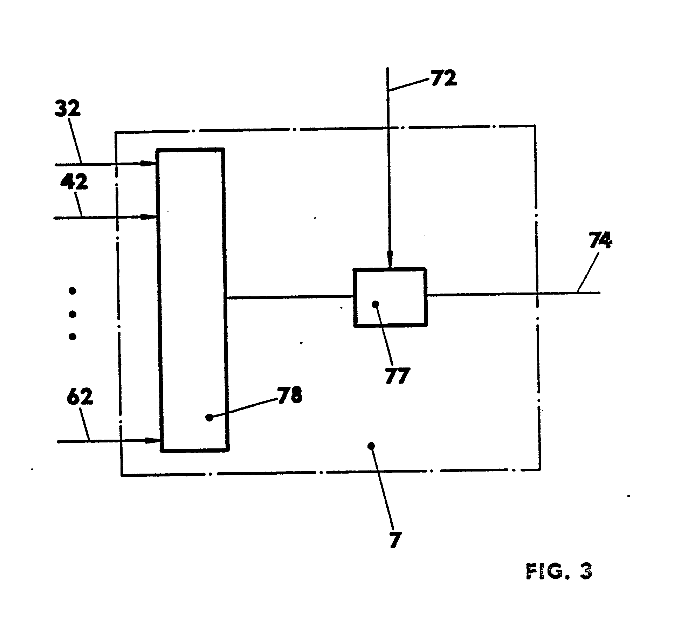

Auf ein entsprechendes Kommando für die Mittelwertbildung hin, wird bei der arithmetischen Mittelwertbildung (Fig. 3) aus n-Werten der Inhalt der Speicher 3 bis 6 (Fig. 2) über die Leitungen 32 bis 62 abgerufen und in einen Summenbildner 78 aufsummiert. Das Ergebnis dieser Summenbildung wird einer Division durch n in einer Divisionsschaltung 77 unterworfen, wobei n die Anzahl der Messungen ist, die über eine Leitung 72 aus dem Zähler 1 abgerufen wird. Das Ergebnis ist der arithmetische Mittelwert und steht zur weiteren Verarbeitung oder Anzeige in der Anzeige- und/oder Weiterverarbeitungsvorrichtung 8 über Leitung 74 zur Verfügung.

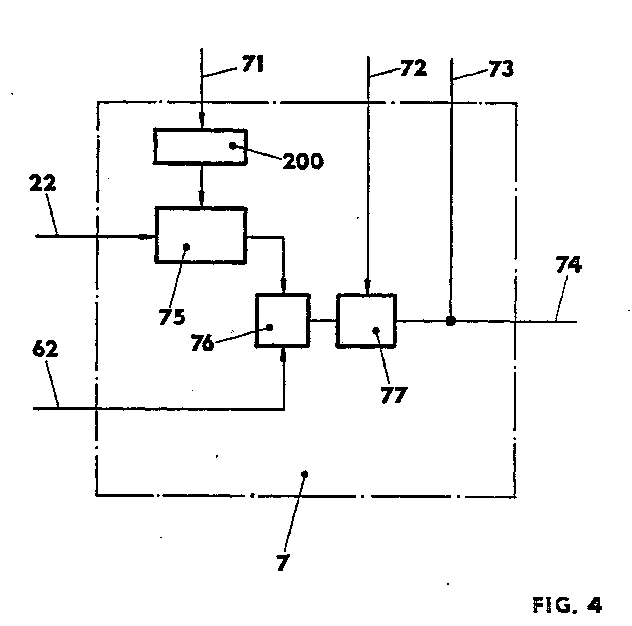

Auf ein entsprechendes Kommando für die Mittelwertbildung hin, wird bei einer Vorrichtung nach Fig. 4 der Inhalt des Speichers 2 nach Fig. 1, der dem bisherigen Mittelwert entspricht über Leitung 22 abgerufen und der Schaltung 75 zugeführt. Ausserdem wird vom Zähler 1 die Anzahl der Messungen über Leitung 71 abgerufen über eine Addierschaltung 200 um eins vermindert (n-1), einer Multipliziereinrichtung 75 zugeführt, die beiden Werte multipliziert und in einer Addierschaltung 76 zu dem Inhalt des Speichers 6 nach Fig. 1, der über eine Leitung 62 abgerufen wurde, addiert. Das Ergebnis dieser Addition wird in der Divisionsschaltung 77 durch die Anzahl der durchgeführten Messungen n (von Leitung 72) dividiert und über die Leitung 74 in der Anzeige- und/oder Weiterverarbeitungsvorrichtung 8 angezeigt oder der Weiterverarbeitung, beispielsweise zur Steuerung eines Bohrwerkes, zugeführt. Gleichzeitig wird über die Leitungen 73, 21 der neue Mittelwert im Speicher 2 unter Löschung des vorhergehenden abgelegt.

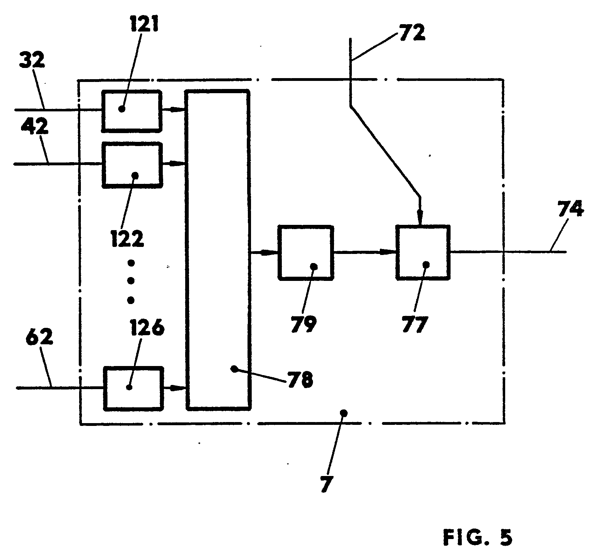

Bei der Vorrichtung nach Fig. 5 erfolgt eine exponentiell gewichtete Mittelwertbildung. Dabei kann der Exponent eine vorgegebene Zahl Z sein, die zwischen Null und Unendlich liegt. Ist dieser Exponent kleiner als 1, so werden neue Unwuchtmeßwerte bei der Mittelwertbildung relativ gering berücksichtigt, liegt der Exponent über 1, werden neue Unwuchtmeßwerte verhältnismäßig stark berücksichtigt. Beträgt Z z.B. 2, so erfolgt eine quadratische Mittelwertbildung.

Nach Fig. 5, die wiederum zusammen mit Fig. 2 zu lesen ist, wird auf ein entsprechendes Startsignal für die Mittelwertbildung hin, der Inhalt der Speicher 3 bis 6 Potenziervorrichtungen 121 bis 126 über Leitungen 32 bis 62 zugeführt (hierbei ist ebenfalls die Anzahl der Potenziervorrichtungen nicht eingeschränkt auf die in Fig. 5 dargestellte Anzahl), in denen eine Potenzierung erfolgt. Das Ergebnis dieser Rechnung wird einem Summenbildner 78 zugeführt, der die Summe aller Ergebnisse der Berechnungen in den Potenziervorrichtungen 121 bis 126 bildet. Der Inhalt des Summenbildners 78 wird danach einer Einrichtung 79 zur Bildung der Wurzel zugeführt und danach erfolgt wieder eine Division in der Divisionsschaltung 77 durch den Inhalt des Zählers 1 (von Leitung 72). Über die Leitung 74 wird das Ergebnis der Anzeige und/oder Weiterverarbeitungseinrichtung 8 zugeführt.

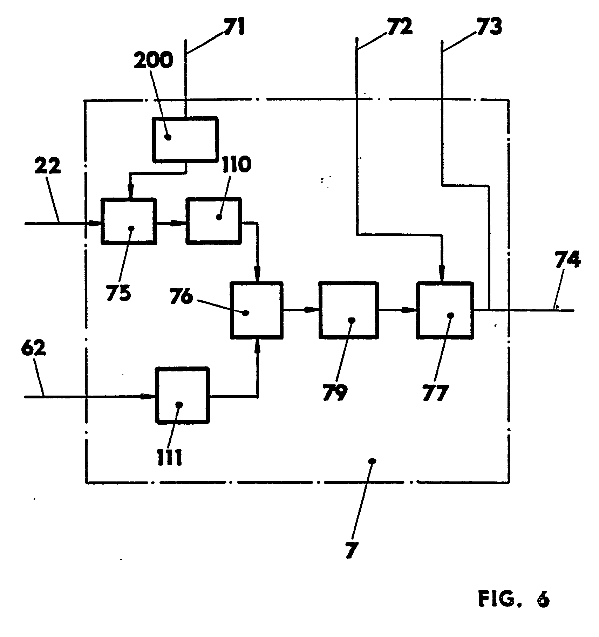

Zur gleitenden exponentiell gewichteten Mittelwertbildung ist eine Vorrichtung nach Fig. 6 geeignet. Diese Vorrichtung ist wiederum unter Berücksichtigung der Offenbarung der Fig. 1 zu betrachten. Der Inhalt des Speichers 2 wird über die Leitung 22 einer Multipliziereinrichtung 75 zum Zwecke der Multiplikation mit n-1 (Leitung 71, Addierschaltung 200) und von dort einer Potenziereinrichtung 110 zugeführt. Hierin erfolgt die Potenzierung mit dem vorgewählten Wert Z. Das Ergebnis dieser Potenzierung wird der Addierschaltung 76 zugeführt. Der Inhalt im Zwischenspeicher 6 wird über die Leitung 62 der Potenziereinrichtung 111 zugeführt und ebenfalls potenziert. Beide Ergebnisse der Potenzierungen werden in der Addierschaltung 76 addiert. Nunmehr wird das Ergebnis der Addierschaltung 76 einer Vorrichtung zum Wurzelziehen 79 zugeführt, von dort einer Divisionsschaltung 77 zur Division durch n (von Leitung 72). Das Ergebnis dieser Rechnung liegt nun wieder über die Leitung 74, zur Anzeige- und/oder Weiterverarbeitung an und wird gleichzeitig über die Leitung 73, 21 als neuer Inhalt dem Speicher 2 zugeführt.

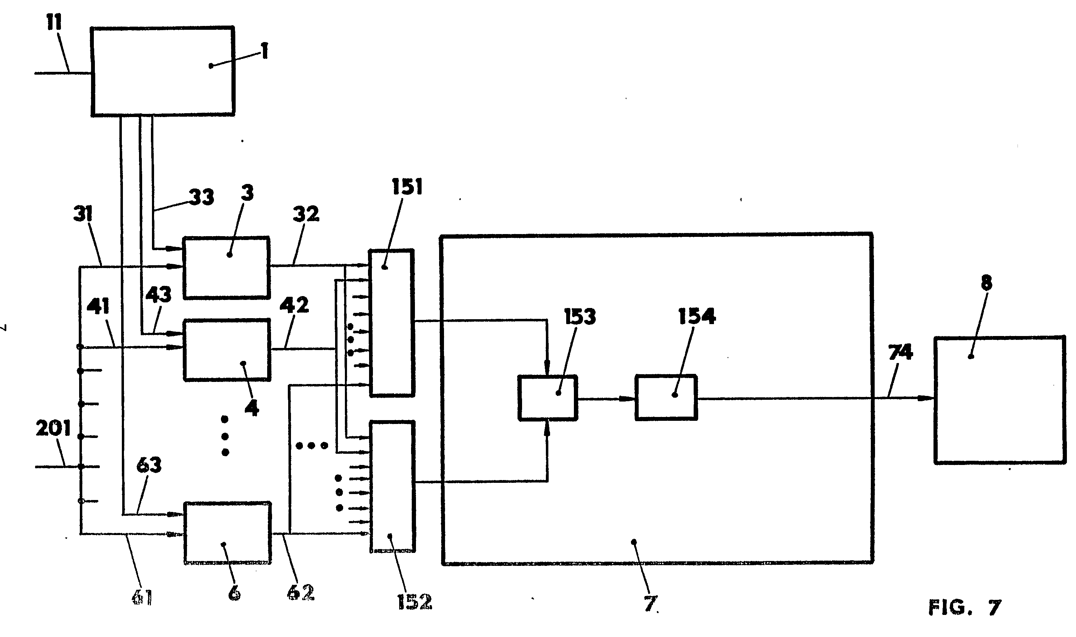

Der Vorrichtung nach Fig. 7 werden (vgl. auch Fig. 2) die nacheinander gewonnenen Meßwerte über die Leitung 201 zugeführt. Dabei liegt jeder Unwuchtmeßwert über die Leitungen 31, 41...61 an allen Meßwerteingängen der Speicher 3, 4...6 an. Vom Zähler 1, dessen Stellung die Nummer der Messung angibt, wird über die Steuerleitung 33 bzw. 43...bzw. 63 ausgewählt, in welchen Speicher der betreffende Unwuchtmeßwert abgelegt wird.

Nachdem eine vorher bestimmte Zahl von Messungen erfolgt ist, und damit die entsprechende Anzahl von Speichern gefüllt ist, werden alle Ergebnisse Vergleichs- und Speicherschaltungen 151, 152 über Leitungen 32, 42...62 zugeführt und selektiert, welcher aus allen Speicherinhalten 3 bis 6 der größte und welcher der kleinste Wert ist. Diese beiden Werte werden über die Speicherschaltung 151 und die Speicherschaltung 152 einer Addierschaltung 153 zugeführt, in der ihre Summe gebildet wird. Dieser Wert wird in einer Divisionsschaltung mit festem Quotienten 154 durch die Zahl zwei geteilt und bildet den Mittelwert aus den Extremen. Über Leitung 74 wird dieser Wert dem Anzeige- und Weiterverarbeitungsgerät 8 zugeführt.

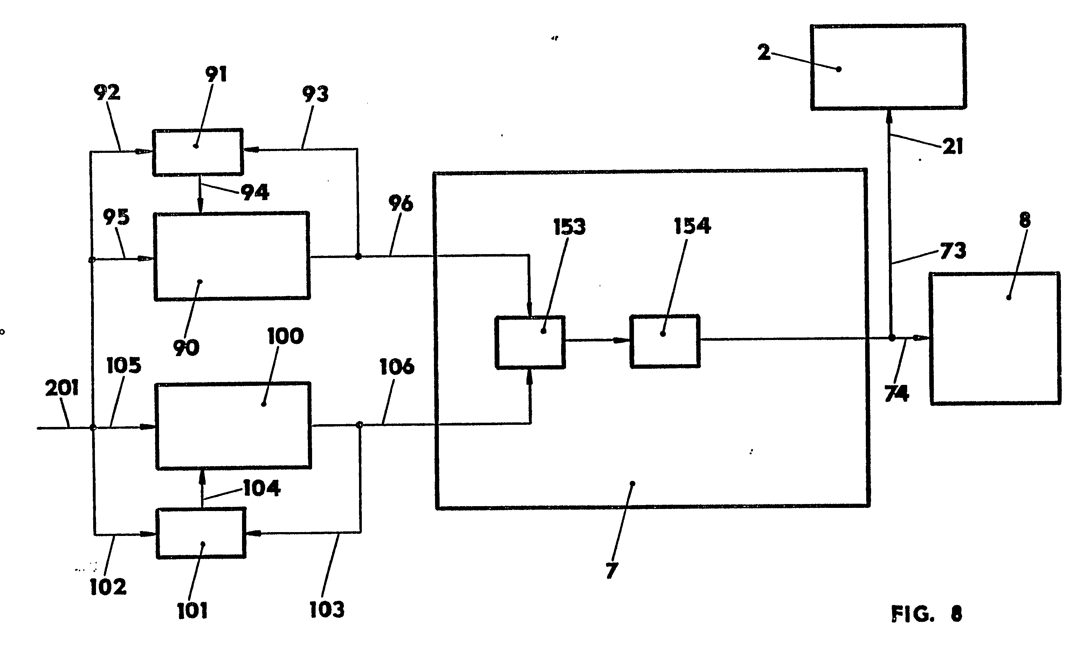

Die gleitende Mittelwertbildung aus Extremwerten geschieht in einer Vorrichtung nach Fig. 8. Hierbei wird jeder neue Unwuchtmeßwert über die Leitung 201 Vergleichsschaltungen 91 und 101 über 92 bzw. 102 zugeführt. Hierin wird der Wert mit dem Inhalt des Speichers 90 bzw. 100 (Leitung 93 bzw. 103) verglichen, wobei der Inhalt dieser Speicher die vorher gewonnenen maximalen bzw. minimalen Unwuchtmeßwerte darstellt. Falls ein neuer Unwuchtmeßwert größer ist als der Inhalt des Speichers 90 wird der Speicher 90 über die Steuerleitung 94 mit dem über die Leitung 95 anliegenden Wert überschrieben. Falls der neue Unwuchtmeßwert kleiner ist als der Inhalt des Speichers 100 wird statt dessen über die Steuerleitung 104 mit dem Inhalt des Speichers 100 mit dem auf Leitung 105 anstehenden Wert überschrieben. Ist der neue Meßwert weder größer als der bisher gewonnene größte Wert noch kleiner als der bisher gewonnene kleinste Wert, so wird er ignoriert.

Nach Beendigung der Messungen wird der Inhalt der Speicher 90 und 100 einer Addierschaltung 153 über Leitungen 96 bzw. 106 zugeführt, das Ergebnis anschließend in der Divisionsschaltung mit festen Quotienten 154 durch den Wert zwei geteilt und, wie bereits oben geschildert, zur Anzeige- und/oder Weiterverarbeitungsvorrichtung 8 über die Leitung 74 geleitet; gleichzeitig wird dieser Wert über die Leitung 73, 21 dem Speicher 2 zugeführt.

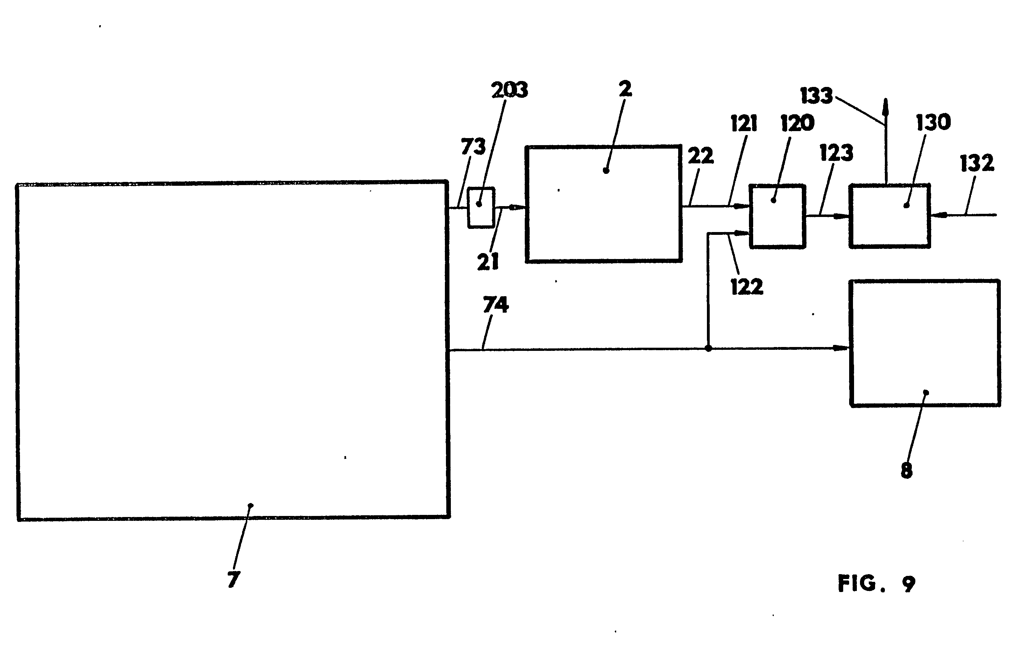

In Fig. 9 wird eine Vorrichtung zur automatischen Bestimmung des Abbruchs der Mittelwertbildung bei Erreichen einer vorgegebenen Toleranz erläutert. Es wird vorausgesetzt, daß nach den bisher beschriebenen Wegen der Mittelwertbildung am Ausgang des Mittelwertbildners 7 auf der Leitung 74 ein neuer Mittelwert vorliegt und im Speicher 2 ein bisheriger Mittelwert gespeichert ist. Eine Verzögerungsschaltung 203 auf Leitung 73 bewirkt, daß vor Ablage des neuen Mittelwertes im Speicher 2 der neue Mittelwert und der bisherige Mittelwert zum Vergleich einer Vergleichsschaltung 120 über Leitungen 122 bzw. 121 zugeführt werden. In dieser Vergleichsschaltung ist zunächst die Differenz zwischen dem neuen und dem bisherigen Mittelwert gebildet und diese über die Leitung 123 einer Toleranzvergleichsschaltung 130 zugeführt. In diese ist über eine Leitung 132 ein Wert eingegeben, der vom Bedienungsmann bestimmt wird und festlegt, bei welchem Wert der Unterschreitung der Differenz der Unwuchtmeßwerte die Messungen abgebrochen wird. Dies kann z. B. ein Bruchteil der für den zu untersuchenden Rotor geforderten Auswuchttoleranz sein. Falls in der Toleranzvergleichsschaltung 130 der entsprechende Wert unterschritten wird, wird ein Signal über eine Leitung 133 abgegeben, das den Meßvorgang automatisch abbricht und ggfs. die Auswuchtmaschine abbremst.

**Patentansprüche**

1. Verfahren zur Gewinnung eines digitalen Unwuchtmeßwertes eines Rotors, bei dem ein Unwuchtmeßwert aus einem Bezugssignal und mindestens einem Meßsignal gewonnen wird, dadurch gekennzeichnet, daß
a) der Unwuchtmeßwert gespeichert wird,
b) ein weiterer Unwuchtmeßwert gewonnen wird,
c) der zuvor gewonnene, gespeicherte Unwuchtmeßwert nach Multiplikation mit einem Faktor, der die Anzahl der vorangegangenen Messungen wiedergibt, zu dem weiteren Unwuchtmeßwert addiert wird,
d) das Ergebnis durch die Anzahl aller bisherigen Messungen dividiert und dieses Ergebnis als neuer Unwuchtmeßwert anstelle des zuvor gewonnenen Unwuchtmeßwertes gespeichert wird und
e) die Verfahrensschritte b) bis d) wiederholt werden, bis der Unwuchtmeßwert innerhalb einer vorgegebenen Toleranz liegt.

2. Verfahren nach Anspruch 1, dadurch gekennzeichnet daß
— ein noch weiterer Unwuchtmeßwert nach in derselben Weise durchgeführten Addition und Division mit dem gespeicherten neuen Unwuchtmeßwert diesen in der Speicherung ersetzt und gleichzeitig angezeigt und/oder weiterverarbeitet wird und
— dieser Vorgang bis zur Erreichung eines stabilen zulässigen Unwuchtmeßwerts weitergeführt wird.

3. Verfahren nach Anspruch 1 und/oder 2, dadurch gekennzeichnet, daß mindestens ein weiterer Unwuchtmeßwert während desselben Meßvorgangs gebildet wird.

4. Verfahren nach einem oder mehreren der Ansprüche 1 bis 3, dadurch gekennzeichnet, daß
— nach der Multiplikation mit dem Faktor dieser Wert mit einem vorgegebenen Exponenten potenziert wird.
— der weitere Unwuchtmeßwert mit demselben Exponenten potenziert wird,
— anschließend eine Addition dieser Ergebnisse durchgeführt wird, aus deren entstandenem Wert die Wurzel mit demselben Exponenten als Wurzelexponenten gezogen wird und
— anzeigt und/oder weiterverarbeitet wird.

5. Verfahren zur Gewinnung eines Unwuchtmeßwerts eines Körpers aus einem bei einer Unwuchtmessung gewonnenen Bezugssignal und mindestens einem Meßsignal, wobei der Unwuchtmeßwert digital vorliegt, dadurch gekennzeichnet, daß
— gesteuert von einem Zähler, dessen Stellung der Anzahl der jeweils bisher durchgeführten Messungen entspricht, jeder Unwuchtmeßwert in einem zugehörigen Speicher gespeichert wird
— nach einer vorgegebenen Zeit oder vorgegebenen Anzahl von Messungen alle gespeicherten Werte einem Summenbildner zugeführt werden
— die Summe durch die Anzahl der Messungen dividiert wird und
— das Ergebnis angezeigt und/oder weiterverarbeitet wird.

6. Verfahren nach Anspruch 5, dadurch gekennzeichnet, daß
— vor der Summierung eine Potenzierung der gespeicherten Werte mit einem vorgegebenen Exponenten durchgeführt wird und
— nach der Summierung vor Division und Anzeige aus dem Ergebnis die Wurzel mit demselben Exponenten als Wurzelexponenten gezogen wird.

7. Verfahren nach Anspruch 4 oder 6, dadurch gekennzeichnet, daß der Exponent kleiner eins ist.

8. Verfahren nach Anspruch 4 oder 6, dadurch gekennzeichnet, daß der Exponent größer eins ist.

9. Verfahren nach Anspruch 5, dadurch gekennzeichnet, daß
— nach einer vorgegebenen Anzahl von Messungen aus allen gespeicherten Unwuchtmeßwerten der größte und kleinste Unwuchtmeßwert ausgewählt wird
— diese Extremwerte addiert und
— nach anschließender Division durch zwei angezeigt und/oder weiterverarbeitet wird.

10. Verfahren zur Gewinnung eines Unwuchtmeßwertes eines Körpers aus einem bei einer Unwuchtmessung gewonnenen Bezugssignal und mindestens einem Meßsignal, wobei der Unwuchtmeßwert digital vorliegt, dadurch gekennzeichnet, daß
— jeder neue Unwuchtmeßwert mit dem bis dahin aufgetretenen größten und kleinsten Unwuchtmeßwert verglichen wird
— entsprechend seinem Abweichen vom Wert des Vorhergehenden den bisherigen Größt- oder Kleinstwert in dem hierfür jeweils vorgesehenen Speicher ersetzt
— bei einer Größe, die zwischen dem bisherigen gespeicherten Größt- und Kleinstwert liegt, der neue Unwuchtmeßwert ignoriert wird

— nach einer bestimmten Zeit oder Anzahl von Messungen der gespeicherte Kleinstwert und der gespeicherte Größtwert addiert werden und dieses Ergebnis nach Division durch zwei angezeigt und/oder weiterverarbeitet wird.

11. Verfahren zur Beendigung der Bildung eines neuen als Unwuchtmeßwert anzuzeigenden Mittelwertes nach einem oder mehreren der vorhergehenden Ansprüche, dadurch gekennzeichnet, daß

— eine Differenz zwischen dem neuen und dem bisherigen Mittelwert gebildet wird

— diese Differenz mit einer vorgegebenen Unwuchttoleranz verglichen wird

— bei einer Differenz, die mindestens einmal kleiner als die zugelassene Toleranz ist, der Meßvorgang abgebrochen wird.

12. Verfahren nach Anspruch 11, dadurch gekennzeichnet, daß die Anzahl der Unterschreitungen vorgewählt wird.

13. Vorrichtung zur Durchführung des Verfahrens zur Gewinnung eines Unwuchtmeßwertes nach einem oder mehreren der Ansprüche 1, 2, 3 mit einer Einrichtung zur Verarbeitung des Bezugssignals und des mindestens einen Meßsignals, wobei der Unwuchtmeßwert digital vorliegt, dadurch gekennzeichnet, daß

— ein Zähler (1) über Leitungen (71, 72) mit dem Mittelwertbildner (7) verbunden ist

— ein Zwischenspeicher (6) mit dem Mittelwertbildner (7) verbunden ist

— im Mittelwertbildner (7) eine Multipliziereinrichtung (75) über eine Leitung (71), auf der eine Schaltung (200) vorgesehen ist, mit dem Zähler (1) und über eine Leitung (22) mit dem Speicher (2) verbunden ist

— eine Addierschaltung (76) vorgesehen ist, die über eine Leitung (62) mit dem Zwischenspeicher (6) und über eine Leitung mit der Multipliziereinrichtung (75) verbunden ist

— die Addierschaltung (76) mit einer Divisionsschaltung (77) verbunden ist, die über die Leitung (72) mit dem Zähler (1) verbunden ist

— der Ausgang der Divisionsschaltung (77) über eine Leitung (73) mit dem Speicher (2) und über eine Leitung (74) mit einer Anzeige- und/oder Weiterverarbeitungsvorrichtung (8) verbunden ist.

14. Vorrichtung zur Durchführung des Verfahrens nach einem oder mehreren der Ansprüche 4, 7 und 8 mit einer Einrichtung zur Verarbeitung des Bezugssignals und des mindestens einen Meßsignals, wobei der Unwuchtmeßwert digital vorliegt, dadurch gekennzeichnet, daß

— ein Zähler (1) über Leitungen (71, 72) mit dem Mittelwertbildner (7) verbunden ist

— ein Zwischenspeicher (6) mit dem Mittelwertbildner (7) verbunden ist

— im Mittelwertbildner (7) eine Multipliziereinrichtung (75) über eine Leitung (71), auf der eine Schaltung (200) vorgesehen ist, mit dem Zähler (1) und über eine Leitung (22) mit dem Speicher (2) verbunden ist

— eine Addierschaltung (76) vorgesehen ist, die über Leitung (62) mit dem Zwischenspeicher (6) und über eine Leitung mit der Multipliziereinrichtung (75) verbunden ist

— die Addierschaltung (76) mit einer Divisionsschaltung (77) verbunden ist, die über die Leitung (72) mit dem Zähler (1) verbunden ist

— der Ausgang der Divisionsschaltung (77) über eine Leitung (73) mit dem Speicher (2) und über eine Leitung (74) mit einer Anzeige- und/oder Weiterverarbeitungsvorrichtung (8) verbunden ist

— im Mittelwertbildner (7) eine Potenziereinrichtung (110) zwischen Multipliziereinrichtung (75) und Addierschaltung (76) und

— eine Potenziereinrichtung (111) zwischen Zwischenspeicher (6) und Addierschaltung (76) vorgesehen ist und

— zwischen Addierschaltung (76) und Divisionsschaltung (77) eine Einrichtung (79) zum Wurzelziehen vorgesehen ist.

15. Vorrichtung zur Durchführung des Verfahrens zur Gewinnung eines Unwuchtmeßwertes nach einem oder mehreren der Ansprüche 5, 6, 7 und 8 mit einer Einrichtung zur Verarbeitung des Bezugssignals und des mindestens einen Meßsignals, wobei der Unwuchtmeßwert digital vorliegt, dadurch gekennzeichnet, daß

— ein Zähler (1) über Steuerleitungen (33, 43...63) mit Zwischenspeichern (3, 4...6) und über Leitung (72) mit einer im Mittelwertbildner (7) enthaltenen Divisionsschaltung (77) verbunden ist

— die Zwischenspeicher (3, 4...6) über Leitungen (31, 41...61) Unwuchtmeßwerte erhalten

— die Speicher (3, 4...6) über Leitungen (32, 42...62) mit einem Summenbildner (78) im Mittelwertbildner (7) verbunden sind

— der Summenbildner (78) mit der Divisionsschaltung (77) verbunden ist und

— der Ausgang der Divisionsschaltung (77) über eine Leitung (74) mit der Anzeige- und/oder Weiterverarbeitungseinrichtung (8) verbunden ist.

16. Vorrichtung nach Anspruch 15, dadurch gekennzeichnet, daß zwischen Zwischenspeicher (3, 4...6) und Summenbildner (78) Potenziereinrichtungen (121, 122...126) und zwischen Summenbildner (78) und Divisionsschaltung (77) eine Einrichtung (79) zum Wurzelziehen vorgesehen ist.

17. Vorrichtung zur Durchführung des Verfahrens zur Gewinnung eines Unwuchtwertes nach Anspruch 9 mit einer Einrichtung zur Verarbeitung des Bezugssignals und des mindestens einen Meßsignals, wobei der Unwuchtmeßwert digital vorliegt, dadurch gekennzeichnet, daß

— ein Zähler (1) über Steuerleitungen (33, 43...63) mit Zwischenspeichern (3, 4...6) und über Leitung

7

(72) mit einer im Mittelwertbildner (7) enthaltenen Divisionsschaltung (77) verbunden ist
— die Zwischenspeicher (3, 4...6) einerseits über Leitungen (31, 41...61) Unwuchtmeßwerte erhalten
— zwischen Zwischenspeicher (3, 4...6) und Anzeige- und/oder Weiterverarbeitungseinrichtung (8) im Mittelwertbildner (7) ein Maximalspeicher (151) und ein Minimalspeicher (152) vorgesehen sind
— eine mit diesen Speichern verbundene Addierschaltung (153) und
— eine Divisionsschaltung mit festem Teiler (154) zwischen Addierschaltung (153) und Anzeige- und/oder Weiterverarbeitungseinrichtung (8) angeordnet ist.

18. Vorrichtung zur Durchführung des Verfahrens zur Gewinnung eines Unwuchtwertes nach Anspruch 10 mit einer Einrichtung zur Verarbeitung des Bezugssignals und des mindestens einen Meßsignals, wobei der Unwuchtmeßwert digital vorliegt, dadurch gekennzeichnet, daß
— auf einer Leitung (201) Unwuchtmeßwerte am Eingang von Vergleichsschaltungen (91 bzw. 101) anstehen
— Vergleichsschaltungen (91 bzw. 101) mit Speichern (90 bzw. 100) verbunden sind
— die Ausgänge der Speicher (90 bzw. 100) über Leitungen (93, 103) mit den Vergleichsschaltungen (91 bzw. 101) und über Leitungen (96 bzw. 106) mit einer Addierschaltung (153) verbunden sind
— der Ausgang der Addierschaltung (153) mit einer Divisionsschaltung mit festem Teiler (154) und dieser mit der Anzeige- und/oder Weiterverarbeitungseinrichtung (8) verbunden sind.

19. Vorrichtung zur Durchführung des Verfahrens zur Gewinnung eines Unwuchtmeßwertes nach Anspruch 11 mit einer Einrichtung zur Verarbeitung des Bezugssignals und des mindestens einen Meßsignals, wobei der Unwuchtmeßwert digital vorliegt, dadurch gekennzeichnet, daß
— ein Speicher (2) mit dem Mittelwertbildner (7) über eine Verzögerungsschaltung (203) und mit einem Eingang (121) einer Vergleichsschaltung (120) verbunden ist
— der Mittelwertbildner (7) über eine Leitung (74) mit einem zweiten Eingang (122) der Vergleichseinheit (120) verbunden ist
— der Mittelwertbildner (7) über die Leitung (74) mit der Anzeige- und/oder Weiterverarbeitungseinrichtung (8) verbunden ist
— die Vergleichseinheit (120) über eine Leitung (123) mit einem Toleranzvergleicher (130) verbunden ist, der mit einer Eingabeleitung (132) zur Eingabe einer Toleranz verbunden ist
— über eine Leitung (133) ausgehend vom Toleranzvergleicher (130) eine Abschaltinformation für die Unwuchtmessung weitergebbar ist.

**Claims**

1. Process for obtaining a digital measured value of unbalance of a rotor, in which a measured value of unbalance is obtained from one reference signal and at least one test signal, characterised in that
   a) the measured value of unbalance is stored,
   b) a further measured value of unbalance is gained,
   c) after multiplication by a factor that reproduces the number of preceding measurements, the measured value of unbalance, previously obtained and stored, is added to the additional measured value of unbalance,
   d) the result is divided by the number of all preceding measurements and this result is stored as a new measured value of unbalance in place of the measured value of unbalance previously obtained, and
   e) the process steps b) to d) are repeated until the measured value of unbalance lies within a predetermined range of tolerance.

2. Process according to claim 1, characterised in that
   — yet another measured value of unbalance replaces the stored new measured value of unbalance in the memory according to operations of addition and division carried out on the stored measured value of unbalance in the same way, and is simultaneously displayed and/or processed further, and
   — this procedure is continued until a stable, dependable measured value of unbalance is reached.

3. Process according to claim 1/or 2, characterised in that at least one further measured value of unbalance is formed during the same measuring procedure.

4. Process according to one or more of claims 1 to 3, characterised in that
   — after multiplication by the factor, this value is raised to the power of a predetermined exponent.
   — the additional measured value of unbalance is raised to the power of the same exponent,
   — subsequently, the sum of these resultants is formed, from which value the root of the degree of the exponent is formed and
   — is displayed or processed further.

5. Process for obtaining a measured value of unbalance of a body from a reference signal obtained during a measurement of unbalance and at least one measured value, wherein the measured value of unbalance is in digital form, characterised in that
   — controlled by a counter, which is adjusted in correspondence with the number of measurements previously carried out, each measured value of unbalance is stored in an associated memory
   — after a predetermined time or predetermined number of measurements, all stored values are fed into a summer

8

— the sum is divided by the number of measurements and

— the result is displayed and/or processed further.

6. Process according to claim 5, characterised in that

— before summation, the stored values are raised to the power of a predetermined index and

— after summation, before division and display, the root of the same index is formed.

7. Process according to claim 4 or 6, characterised in that the exponent is less than 1.

8. Process according to claim 4 or 6, characterised in that the exponent is greater than one.

9. Process according to claim 5, characterised in that

— after a predetermined number of measurements from all stored measured values of unbalance, the greatest and smallest measured value of unbalance are chosen

— these extreme values are added and

— after subsequent division by two, the resultant is displayed and/or further processed.

10. Process for obtaining a measured value of unbalance of a body from a reference signal obtained from a measurement of unbalance and at least one test signal, wherein the measured value of unbalance is present in digital form, characterised in that

— each new measured value of unbalance is compared to the greatest and smallest number to have emerged until then

— it replaces the previous greatest or smallest value in the appropriate memory provided, depending on its deviation from the value of the foregoing

— where a value lies between the greatest and smallest values previously stored, the new measured value of unbalance is ignored

— after a determined period of time or number of measurements, the smallest value stored and the greatest value stored are added, and this result after division by two is displayed and/or is further processed.

11. Process ending the formation of a new average to be displayed as the measured value of unbalance, according to one or more of the foregoing claims, characterised in that

— a difference is formed between the new and the previous average

— this difference is compared to a previously stipulated tolerance for unbalance

— where there is a difference that is at least once less than the admissible tolerance, the measuring process is broken off.

12. Process according to claim 11, characterised in that the number of lower deviations is previously chosen.

13. Device for carrying out the process for obtaining a measured value of unbalance according to one or more of claims 1, 2, 3 with an arrangement for processing the reference signal and the at least one test signal, wherein the measured value of unbalance is in digital form, characterised in that

— a counter (1) is connected via lines (71, 72) to the averaging device (7)

— an intermediate memory (6) is connected to the averaging device (7)

— in the averaging device, a multiplier device (75) is connected via a line (71), in which a circuit (200) is provided, to the counter (1) and via a line (22) to the memory (2)

— an adder circuit (76) is provided, which is connected via a line (62) to the intermediate memory (6) and via a line to the multiplier device (75)

— the adder circuit (76) is connected to a divider circuit (77), which is connected via a line (72) to the counter (1)

— the output of the divider circuit (77) is connected via a line to the memory (2) and via a line (74) to a display and/or further processing device (8).

14. Device for carrying out the process according to one or more of claims 4, 7 and 8 with an arrangement for processing the reference signal and the at least one test signal, of which there is at least one, wherein the measured value of unbalance is present in digital form, characterised in that

— a counter (1) is connected via lines (71, 72) to the averaging device (7)

— an intermediate memory (6) is connected to the averaging device (7)

— in the averaging device (7) a multiplier device (75) is connected via a line (71), in which a circuit (200) is provided, to the counter (1) and via a line (22) to the memory (2)

— an adder circuit (76) is provided, which is connected via a line (62) to the intermediate memory (6) and via a line to the multiplier device (75)

— the adder circuit (76) is connected to a divider circuit (77), which is connected via the line (72) to the counter (1)

— the output of the divider circuit (77) is connected via a line (73) to the memory (2) and via a line (74) to a display and/or further processing device (8)

— an exponentiating arrangement (110) is provided in the averaging device (7) between the multiplier device (75) and the adder circuit (76)

— an exponentiating device (111) is provided between intermediate memory (6) and adder circuit (76) and

— an arrangement (79) for taking roots is provided between adder circuit (76) and divider circuit (77).

15. Device for carrying out the process for obtaining a measured value of unbalance according to one or more of claims 5, 6, 7 and 8 with an arrangement for processing the reference signal and the at

9

least one test signal, wherein the measured value of unbalance is present in digital form, characterised in that

— a counter (1) is connected via control lines (33, 43...63) to intermediate memories (3, 4...6) and via line (72) to a divider circuit (77) contained in the averaging device (7)

— the intermediate circuits (3, 4...6) receive measured values of unbalance via lines (31, 41...61)

— the memories (3, 4...6) are connected via lines (32, 42...62) to a summer (78) in the averaging device (7)

— the summer (78) is connected to the divider circuit (77) and

— the output of the divider circuit (77) is connected via a line (74) to the display and/or further processing device (8).

16. Device according to claim 15, characterised in that — exponentiating arrangements (121, 122...126) are provided between intermediate memory (3, 4...6) and summer (78), and a device (79) for taking roots is provided between summer (78) and divider circuit (77).

17. Device for carrying out the process for obtaining a value of unbalance according to claim 9 with an arrangement for processing the reference signal and the at least one test signal, and wherein the measured value of unbalance is present in digital form, characterised in that

— a counter (1) is connected via control lines (33, 43...63) to intermediate memories (3, 4...6) and via line (72) to a divider circuit (77) contained in the averaging device (7)

— the intermediate memories (3, 4...6) on the one hand receive measured values of unbalance via lines (31, 41...61)

— a maximal memory (151) and a minimal memory (152) are provided between intermediate memories (3, 4...6) and display and/or further processing device (8) in the averaging device (7)

— an adder circuit (153) connected to these memories and

— a divider circuit with a fixed divisor (154) is arranged between adder circuit (153) and display and/or further processing facility (8).

18. Device for carrying out the process for obtaining a value of unbalance according to claim 10 with an arrangement for processing the reference signal and the at least one test signal, wherein the measured value of unbalance is present in digital form, characterised in that

— measured values of unbalance appear on a line (201) at the input of comparator circuits (91 or 101)

— comparator circuits (91 or 101) are connected to memories (90 or 100)

— the outputs of the memories (90 or 100) are connected via lines (93, 103) to the comparator circuits (91 and 101 respectively) and via lines (96 and 106 respectively) to an adder circuit (153)

— the output of the adder circuit (153) is connected to a divider circuit with a fixed divider (154) and the latter is connected to the display and/or further processing device (8).

19. Device for carrying out the process for obtaining a measured value of unbalance according to claim 11 with an arrangement for processing the reference signal and the at least one test signal, wherein the measured value of unbalance is present in digital form, characterised in that

— a memory (2) is connected to the averaging device (7) via a delay circuit (203) and to the input (121) of a comparator circuit (120)

— the averaging device (7) is connected via a line (74) to a second input (122) of the comparator unit (120)

— the averaging device (7) is connected via the line (74) to the display and/or further processing device (8)

— the comparator unit (120) is connected via a line (123) to a tolerance comparator (130), which is connected to an input line (132) for inputting a tolerance

— starting from the tolerance comparator (130) a switch-off signal for the measurement of unbalance can be transmitted via a line (133).

## Revendications

1. Procédé pour obtenir une valeur mesurée de balourd numérique d'un rotor dans lequel on obtient une valeur mesurée de balourd à partir d'un signal de référence et d'au moins un signal de mesure, caractérisé en ce que

a) la valeur mesurée de balourd est enregistrée,

b) on obtient une autre valeur mesurée de balourd,

c) la valeur mesurée de balourd obtenue précédemment et enregistrée, est additionnée avec l'autre valeur mesurée de balourd, après multiplication par un facteur qui reproduit le nombre des mesures précédentes,

d) le résultat est divisé par le nombre de toutes les mesures antérieures et ce résultat est enregistré en tant que nouvelle valeur mesurée de balourd à la place de la valeur mesurée de balourd obtenue précédemment, et

e) on répète les phases b) à d) du procédé jusqu'à ce que la valeur mesurée de balourd se trouve dans les limites d'une tolérance prédéterminée.

2. Procédé selon la revendication 1, caractérisé en ce qu'encore une autre valeur mesurée de balourd, après addition et division effectuées de la même façon avec la nouvelle valeur mesurée de balourd enregistrée, remplace celle-ci dans la mémoire et est en même temps affichée et/ou elle subit un traitement ultérieur et cette opération est poursuivie jusqu'à obtention d'une valeur mesurée de balourd stable acceptable.

3. Procédé selon la revendication 1 et/ou 2, caractérisé en ce qu'au moins une autre valeur mesurée de balourd est formée pendant la même opération de mesure.

4. Procédé selon l'une ou plusieurs des revendications 1 à 3, caractérisé en ce que
— après la multiplication par le facteur, cette valeur est élevée à une puissance supérieure avec un exposant prédéterminé,
— l'autre valeur mesurée de balourd est élevée à une puissance supérieure avec le même exposant,
— une addition de ces résultats est ensuite effectuée, la racine de la valeur résultante est extraite avec le même exposant en tant qu'exposant de racine, et
— ce résultat est affiché et/ou soumis à un traitement ultérieur.

5. Procédé pour obtenir une valeur mesurée de balourd d'un corps à partir d'un signal de référence obtenu lors d'une mesure de balourd et d'au moins un signal de mesure, la valeur mesurée de balourd se présentant sous forme numérique, caractérisé en ce que
— sous la commande d'un compteur dont la position correspond au nombre de mesures respectivement effectuées jusqu'alors, chaque valeur mesurée est enregistrée dans une mémoire correspondante,
— au bout d'une période prédéterminée ou après un nombre prédéterminé de mesures, toutes les valeurs enregistrées sont amenées à un totalisateur,
— la somme est divisée par le nombre de mesures, et
— le résultat est affiché et/ou soumis à un traitement ultérieur.

6. Procédé selon la revendication 5, caractérisé en ce que
— avant la totalisation, on effectue une élévation des valeurs enregistrées à une puissance supérieure avec un exposant prédéterminé, et
— après la totalisation, avant la division et l'affichage, on extrait la racine du résultat avec le même exposant en tant qu'exposant de racine.

7. Procédé selon la revendication 4 ou 6, caractérisé en ce que l'exposant est plus petit que un.

8. Procédé selon la revendication 4 ou 6, caractérisé en ce que l'exposant est plus grand que un.

9. Procédé selon la revendication 5, caractérisé en ce que
— après un nombre prédéterminé de mesure, on sélectionne parmi toutes les valeurs mesurées de balourd la plus grande et la plus petite valeur de balourd,
— on additionne ces valeurs extrêmes, et
— après avoir fait une division par deux, le résultat est affiché et/ou soumis à un traitement ultérieur.

10. Procédé pour obtenir une valeur mesurée de balourd d'un corps à partir d'un signal de référence obtenu lors d'une mesure de balourd, et d'au moins un signal de mesure, la valeur mesurée de balourd se présentant sous forme numérique, caractérisé en ce que
— chaque nouvelle valeur mesurée de balourd est comparée à la plus grande et à la plus petite valeur mesurée de balourd étant apparues jusque là,
— en fonction de son écart par rapport aux valeurs précédentes, cette nouvelle valeur mesurée remplace la plus grande ou la plus petite valeur antérieure dans la mémoire respectivement prévue dans ce but,
— dans le cas où sa valeur est située entre la plus grande et la plus petite valeur antérieurement enregistrées, on ignore la nouvelle valeur mesurée de balourd,
— après une période prédéterminée ou après un nombre prédéterminé de mesures, on additionne la plus petite valeur enregistrée et la plus grande valeur enregistrée, et après division par deux, ce résultat est affiché et/ou soumis à traitement ultérieur.

11. Procédé pour déterminer la formation d'une nouvelle valeur moyenne à afficher en tant que valeur mesurée de balourd, selon l'une ou plusieurs des revendications précédentes, caractérisé en ce que
— on forme une différence entre la nouvelle moyenne et la moyenne antérieure,
— on compare cette différence à une tolérance de balourd prédéterminée,
— si la différence est, au moins une fois, plus petite que la tolérance autorisée, l'opération de mesure est interrompue.

12. Procédé selon la revendication 11, caractérisé en ce qu'on présélectionne le nombre des dépassements par valeur inférieure.

13. Dispositif pour mettre en œuvre le procédé pour obtenir une valeur mesurée de balourd selon une ou plusieurs des revendications 1, 2, 3 avec un dispositif pour traiter le signal de référence et au moins un signal de mesure, la valeur mesurée de balourd se présentant sous forme numérique, caractérisé en ce que
— un compteur (1) est relié par des canalisations (71, 72) au calculateur de moyenne (7),
— une mémoire intermédiaire (6) est reliée au calculateur de moyenne (7),
— dans le calculateur de moyenne (7), un dispositif multiplicateur (75) est relié au compteur (1) par une canalisation (71) sur laquelle est prévu un circuit (200), et à la mémoire (2) par une canalisation (22),

— on prévoit un circuit d'addition (76) qui est relié à la mémoire intermédiaire (6) par une canalisation (62) et au dispositif de multiplication (75) par une canalisation,

— le circuit d'addition (76) est relié à un circuit de division (77), qui est relié au compteur (1) par une canalisation (72),

— la sortie du circuit de division (77) est reliée par une canalisation (73) à la mémoire (2) et par une canalisation (74) à un dispositif d'affichage et/ou de traitement ultérieur (8).

14. Dispositif pour mettre en œuvre le procédé selon une ou plusieurs des revendications 4, 7 et 8, comportant un dispositif pour traiter le signal de référence et au moins un signal de mesure, la valeur mesurée de balourd se présentant sous forme numérique, caractérisé en ce que

— un compteur (1) est relié par des canalisations (71, 72) au calculateur de moyenne (7),

— une mémoire intermédiaire (6) est reliée au calculateur de moyenne (7),

— dans le calculateur de moyenne (7), un dispositif multiplicateur (75) est relié au compteur (1) par une canalisation (71), sur laquelle est prévu un circuit (200) et à la mémoire (2) par une canalisation (22),

— un circuit d'addition (76) est prévu, qui est relié par une canalisation (62) à la mémoire intermédiaire (6) et par une canalisation au dispositif multiplicateur (75),

— le circuit d'addition (76) est relié à un circuit de division (77), qui est relié par la canalisation (72) au compteur (1),

— la sortie du circuit de division (77) est reliée par une canalisation (73) à la mémoire (2) par une canalisation (74) à un dispositif d'affichage et/ou de traitement ultérieur (8),

— on prévoit dans le calculateur de moyenne (7) un dispositif d'élévation à une puissance supérieure (110) entre le dispositif multiplicateur (75) et le circuit d'addition (76), et

— on prévoit un dispositif d'élévation à une puissance supérieure (111) entre la mémoire intermédiaire (6) et le circuit d'addition (76), et

— on prévoit entre le circuit d'addition (76) et le circuit de division (77) un dispositif (79) pour extraire la racine.

15. Dispositif pour mettre en œuvre le procédé pour obtenir une valeur mesurée de balourd selon une ou plusieurs des revendications 5, 6, 7 et 8 comportant un dispositif pour traiter le signal de référence et au moins un signal de mesure, la valeur mesurée de balourd se présentant sous forme numérique, caractérisé en ce que

— un compteur (1) est relié par des canalisations de commande (33, 43, ... 63) à des mémoires intermédiaires (3, 4 ... 6) et par une canalisation (72) à un circuit de division (77) placé dans le calculateur de moyenne (7),

— les mémoires intermédiaires (3, 4 .. 6) reçoivent par les canalisations (31, 41 ... 61) des valeurs mesurées de balourd,

— les mémoires (3, 4 ... 6) sont reliées par des canalisations (32, 42 ... 62) à un totalisateur (78) dans le calculateur de moyenne (7),

— le totalisateur (78) est relié au circuit de division (77), et

— la sortie du circuit de division (77) est reliée par une canalisation (74) au dispositif d'affichage et/ou de traitement ultérieur (8).

16. Dispositif selon la revendication 15, caractérisé en ce qu'on prévoit entre les mémoires intermédiaires (3, 4 ... 6) et le totalisateur (78) des dispositifs d'élévation à une puissance supérieure (121, 122 ... 126), et entre le totalisateur (78) et le circuit de division (77) un dispositif (79) pour extraire la racine.

17. Dispositif pour mettre en œuvre le procédé pour obtenir une valeur mesurée de balourd selon la revendication 9 comportant un dispositif pour traiter le signal de référence et au moins un signal de mesure, la valeur mesurée de balourd se présentant sous forme numérique, caractérisé en ce que

— un compteur (1) est relié par des canalisations de commande (33, 43 ... 63) à des mémoires intermédiaires (3, 4 ... 6) et par une canalisation (72) à un circuit de division (77) placé dans le calculateur de moyenne (7),

— les mémoires intermédiaires (3, 4 ... 6) reçoivent par des canalisations (31, 41 ... 61) des valeurs mesurées de balourd,

— on prévoit entre les mémoires intermédiaires (3, 4 ... 6) et le dispositif d'affichage et/ou de traitement ultérieur (8) dans le calculateur de moyenne (7) une mémoire de maxima (151) et une mémoire de minima (152),

— un circuit d'addition (153) relié à ces mémoires et

— un circuit de division à diviseur fixe (154) sont disposés entre le circuit d'addition (153) et le dispositif d'affichage et/ou de traitement ultérieur (8).

18. Dispositif pour mettre en œuvre le procédé pour obtenir une valeur de balourd selon la revendication 10, comportant un dispositif pour traiter le signal de référence et au moins un signal de mesure, la valeur mesurée de balourd se présentant sous forme numérique, caractérisé en ce que

— sur une canalisation (201) apparaissent des valeurs mesurées de balourd à l'entrée de circuits de comparaison (91 et 101),

— des circuits de comparaison (91 et 101) sont reliés à des mémoires (90 et 100),

— les sorties des mémoires (90 et 100) sont reliées par des canalisations (93, 103) à des circuits de comparaison (91 et 101) et par des canalisations (96 et 106) à un circuit d'addition (153),

— la sortie du circuit d'addition (153) est reliée à un circuit de division à un diviseur fixe (154) et la sortie de celui-ci est reliée au dispositif d'affichage et/ou de traitement ultérieur (8).

19. Dispositif pour mettre en œuvre le procédé pour obtenir une valeur mesurée de balourd selon la revendication 11, comportant un dispositif pour traiter le signal de référence et au moins un signal de mesure, la valeur mesurée de balourd se présentant sous forme numérique, caractérisé en ce que

— une mémoire (2) est reliée au calculateur de moyenne (7) par un circuit temporisé (203), et à une entrée (121) d'un circuit de comparaison (120),

— le calculateur de moyenne (7) est relié par une canalisation (74) à une deuxième entrée (122) de l'unité de comparaison (120),

— le calculateur de moyenne (7) est relié par la canalisation (74) au dispositif d'affichage et/ou de traitement ultérieur (8),

— l'unité de comparaison (120) est reliée par une canalisation (123) à un comparateur de tolérance (130) qui est relié à une canalisation d'entrée (132) pour introduire une tolérance,

— par une canalisation (133), on peut transmettre, en partant d'un comparateur de tolérance (130), une information d'arrêt pour la mesure du balourd.

FIG. 1

FIG. 2

FIG. 3

FIG. 4

4

FIG. 5

FIG. 6

FIG. 7

FIG. 8

FIG. 9